(19) Europäisches Patentamt
European Patent Office
Office européen des brevets

(11) **EP 4 304 279 A1**

(12) **EUROPEAN PATENT APPLICATION**
published in accordance with Art. 153(4) EPC

(43) Date of publication:
**10.01.2024  Bulletin 2024/02**

(21) Application number: **22778392.5**

(22) Date of filing: **17.02.2022**

(51) International Patent Classification (IPC):
**H04W 72/12** *(2023.01)*

(52) Cooperative Patent Classification (CPC):
**H04W 72/04; H04W 72/12**

(86) International application number:
**PCT/CN2022/076682**

(87) International publication number:
**WO 2022/206207 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2021  CN 202110350339**

(71) Applicant: **Huawei Technologies Co., Ltd.**
**Longgang**
**Shenzhen, Guangdong 518129 (CN)**

(72) Inventors:
• **LIU, Zhe**
  **Shenzhen, Guangdong 518129 (CN)**
• **PENG, Chenghui**
  **Shenzhen, Guangdong 518129 (CN)**
• **WU, Jianjun**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMMUNICATION METHOD, COMMUNICATION APPARATUS, COMPUTER-READABLE STORAGE MEDIUM AND CHIP**

(57)    Embodiments of this disclosure provide a communications method, a communications apparatus, a computer-readable storage medium, and a chip. In the communications method, a terminal device sends recommendation information to a network device. The recommendation information indicates a recommendation of the terminal device for performing uplink scheduling by the network device. The terminal device receives a configuration parameter of uplink scheduling from the network device. The recommendation information may be included in an RRC message, and includes periodicity information or time domain offset information for grant-free scheduling, or periodicity information or time domain offset information of PDCCH monitoring for grant-based scheduling, and may further include at least one of the following: validity time information, probability information, target information, or reward feedback information. The network device may determine the configuration parameter of uplink scheduling based on the recommendation information from the terminal device, so that more comprehensive information is considered by the network device during the foregoing determining, and a determining result of the configuration parameter is more accurate, thereby further facilitating optimized resource utilization.

FIG. 2

**Description**

**TECHNICAL FIELD**

This disclosure relates to the field of communications, and more specifically, to a communications method, a communications apparatus, a computer-readable storage medium, and a chip.

**BACKGROUND**

A network device needs to first schedule an uplink transmission resource of a terminal device, and then the terminal device can perform uplink transmission by using the scheduled uplink transmission resource. Generally, a mode in which the network device performs scheduling includes a grant-free scheduling mode and a grant-based scheduling mode.

However, in both the grant-free scheduling mode and the grant-based scheduling mode, how to implement a configuration of uplink scheduling is a problem worth considering.

**SUMMARY**

Example embodiments of this disclosure provide a solution for determining a configuration of uplink scheduling in a communications system.

According to a first aspect, a communications method is provided. The communications method includes: A terminal device sends recommendation information to a network device. The recommendation information indicates a recommendation of the terminal device for performing uplink scheduling by the network device. In addition, the terminal device receives a configuration parameter of uplink scheduling from the network device.

In this way, the terminal device may provide the recommendation information to the network device, so that the network device may determine the configuration parameter of uplink scheduling based on the recommendation information, more comprehensive information is considered by the network device, uplink scheduling is more accurately configured, and optimized resource utilization is further facilitated.

In some embodiments of the first aspect, the recommendation information includes at least one of the following for uplink grant-free scheduling: periodicity information or time domain offset information. In this way, the terminal device may provide a recommendation for a periodicity or a time domain offset of uplink grant-free scheduling to the network device by using the recommendation information, so that the network device can determine the configuration parameter of uplink scheduling based on the recommendation.

In some embodiments of the first aspect, the recommendation information includes at least one of the following for uplink grant-based scheduling: periodicity information of physical downlink control channel PDCCH monitoring or time domain offset information of PDCCH monitoring. In this way, the terminal device may provide a recommendation for a periodicity of PDCCH monitoring or a time domain offset of PDCCH monitoring for uplink grant-based scheduling to the network device by using the recommendation information, so that the network device can determine the configuration parameter of uplink scheduling based on the recommendation.

In some embodiments of the first aspect, the recommendation information includes at least one of the following for uplink transmission: a number of repetitions, a modulation and coding scheme MCS, or spectral efficiency of an MCS. In this way, the terminal device may provide a recommendation for an uplink transmission resource to the network device by using the recommendation information, so that the network device can more intuitively obtain an uplink transmission requirement of the terminal device, thereby ensuring that the configuration parameter of uplink scheduling that is determined by the network device is more accurate.

In some embodiments of the first aspect, the recommendation information further includes at least one of the following: validity time information, probability information, target information, or reward feedback information. In this way, the terminal device may further provide more abundant reference information to the network device, so that the network device determines the configuration parameter of uplink scheduling based on the reference information, and the network device can make a decision based on more comprehensive factors, thereby improving accuracy of the decision, and implementing a proper resource configuration.

In some embodiments of the first aspect, that a terminal device sends recommendation information to a network device includes: The terminal device sends a radio resource control RRC message to the network device. The RRC message includes the recommendation information, and the RRC message is one of the following messages: an RRC connection resume complete message, an RRC setup complete message, an RRC reconfiguration complete message, and an RRC recommendation message. In this way, in this disclosure, the recommendation information is transmitted by using the RRC message, so that an existing RRC format can be fully utilized, and the network device can accurately obtain the recommendation information in a timely manner.

According to a second aspect, a communications method is provided. The communications method includes: A network device receives recommendation information from a terminal device. The recommendation information indicates a recommendation of the terminal device for performing uplink scheduling by the network device. The network device determines a configuration parameter of uplink scheduling based on the recommendation information. In addition, the network device sends the configuration parameter to the terminal device.

In this way, the network device can receive the recommendation information of the terminal device for uplink scheduling, and determine the configuration parameter of uplink scheduling based on the recommendation information. In this solution, more comprehensive information is considered by the network device during configuration, and the configuration parameter of uplink scheduling is more accurately determined, so that optimized resource utilization is further facilitated.

In some embodiments of the second aspect, the recommendation information includes at least one of the following for uplink grant-free scheduling: periodicity information or time domain offset information.

In some embodiments of the second aspect, the recommendation information includes at least one of the following for uplink grant-based scheduling: periodicity information of physical downlink control channel PDCCH monitoring or time domain offset information of PDCCH monitoring.

In some embodiments of the second aspect, the recommendation information includes at least one of the following for uplink transmission: a number of repetitions, a modulation and coding scheme MCS, or spectral efficiency of an MCS. In this way, the network device can learn a more direct recommendation of the terminal device for an uplink transmission resource by using the recommendation information, so that an uplink transmission requirement of the terminal device can be more intuitively obtained, thereby ensuring that the determined configuration parameter of uplink scheduling is more accurate.

In some embodiments of the second aspect, the recommendation information further includes at least one of the following: validity time information, probability information, target information, or reward feedback information. In this way, the network device can learn more abundant reference information of the terminal device with respect to the recommendation information, so that the network device determines configuration information of the uplink scheduling based on the reference information, and the network device can make a decision based on more comprehensive factors, thereby improving accuracy of the decision, and implementing a proper resource configuration.

In some embodiments of the second aspect, that a network device receives recommendation information from a terminal device includes: The network device receives a radio resource control RRC message from the terminal device. The RRC message includes the recommendation information, and the RRC message is one of the following messages: an RRC connection resume complete message, an RRC setup complete message, an RRC reconfiguration complete message, and an RRC recommendation message. In this way, the recommendation information in this disclosure is transmitted by using the RRC message, so that an existing RRC format can be fully utilized, and the network device can accurately obtain the recommendation information in a timely manner.

In some embodiments of the second aspect, that the network device determines a configuration parameter of uplink scheduling based on the recommendation information includes: The network device determines the configuration parameter based on the recommendation information and a load status of the network device. In this way, the network device can determine the configuration parameter by comprehensively considering a factor of the terminal device and a factor of the network device, so that more comprehensive factors are considered, and the determined configuration parameter is more accurate.

According to a third aspect, a communications apparatus is provided. The communications apparatus includes: a sending unit, configured to send recommendation information to a network device, where the recommendation information indicates a recommendation of a terminal device for performing uplink scheduling by the network device; and a receiving unit, configured to receive a configuration parameter of uplink scheduling from the network device. The communications apparatus may be implemented at the terminal device. For example, the communications apparatus may include the terminal device or include a chip in the terminal device.

In some embodiments of the third aspect, the recommendation information includes at least one of the following for uplink grant-free scheduling: periodicity information or time domain offset information.

In some embodiments of the third aspect, the recommendation information includes at least one of the following for uplink grant-based scheduling: periodicity information of physical downlink control channel PDCCH monitoring or time domain offset information of PDCCH monitoring.

In some embodiments of the third aspect, the recommendation information includes at least one of the following for uplink transmission: a number of repetitions, a modulation and coding scheme MCS, or spectral efficiency of an MCS.

In some embodiments of the third aspect, the recommendation information further includes at least one of the following: validity time information, probability information, target information, or reward feedback information.

In some embodiments of the third aspect, the sending unit is configured to: send a radio resource control RRC message to the network device. The RRC message includes the recommendation information, and the RRC message is one of the following messages: an RRC connection resume complete message, an RRC setup complete message, an RRC reconfiguration complete message, and an RRC recommendation message.

According to a fourth aspect, a communications apparatus is provided. The communications apparatus includes: a receiving unit, configured to receive recommendation information from a terminal device, where the recommendation information indicates a recommendation of the terminal device for performing uplink scheduling by a network device; a determining unit, configured to determine a configuration parameter of uplink scheduling based on the recommendation information; and a sending unit, configured to send the configuration parameter to the terminal device. The communications apparatus may be implemented at the network device. For example, the communications apparatus may include the network device or include a chip in a network device.

In some embodiments of the fourth aspect, the recommendation information includes at least one of the following for uplink grant-free scheduling: periodicity information or time domain offset information.

In some embodiments of the fourth aspect, the recommendation information includes at least one of the following for uplink grant-based scheduling: periodicity information of physical downlink control channel PDCCH monitoring or time domain offset information of PDCCH monitoring.

In some embodiments of the fourth aspect, the recommendation information includes at least one of the following for uplink transmission: a number of repetitions, a modulation and coding scheme MCS, or spectral efficiency of an MCS.

In some embodiments of the fourth aspect, the recommendation information further includes at least one of the following: validity time information, probability information, target information, or reward feedback information.

In some embodiments of the fourth aspect, the receiving unit is configured to: receive a radio resource control RRC message from the terminal device. The RRC message includes the recommendation information, and the RRC message is one of the following messages: an RRC connection resume complete message, an RRC setup complete message, an RRC reconfiguration complete message, and an RRC recommendation message.

In some embodiments of the fourth aspect, the determining unit is configured to: determine the configuration parameter based on the recommendation information and a load status of the network device.

According to a fifth aspect, a terminal device is provided. The terminal device includes: at least one processor and at least one memory. The at least one memory is coupled to the at least one processor, and stores instructions for execution by the at least one processor. When executed by the at least one processor, the instructions enable the terminal device to implement: sending recommendation information to a network device, where the recommendation information indicates a recommendation of the terminal device for performing uplink scheduling by the network device; and receiving a configuration parameter of uplink scheduling from the network device.

In some embodiments of the fifth aspect, the recommendation information includes at least one of the following for uplink grant-free scheduling: periodicity information or time domain offset information.

In some embodiments of the fifth aspect, the recommendation information includes at least one of the following for uplink grant-based scheduling: periodicity information of physical downlink control channel PDCCH monitoring or time domain offset information of PDCCH monitoring.

In some embodiments of the fifth aspect, the recommendation information includes at least one of the following for uplink transmission: a number of repetitions, a modulation and coding scheme MCS, or spectral efficiency of an MCS.

In some embodiments of the fifth aspect, the recommendation information further includes at least one of the following: validity time information, probability information, target information, or reward feedback information.

In some embodiments of the fifth aspect, when executed by the at least one processor, the instructions enable the terminal device to implement: sending a radio resource control RRC message to the network device. The RRC message includes the recommendation information, and the RRC message is one of the following messages: an RRC connection resume complete message, an RRC setup complete message, an RRC reconfiguration complete message, or an RRC recommendation message.

According to a sixth aspect, a network device is provided. The network device includes: at least one processor and at least one memory. The at least one memory is coupled to the at least one processor, and stores instructions for execution by the at least one processor. When executed by the at least one processor, the instructions enable the network device to implement: receiving recommendation information from a terminal device, where the recommendation information indicates a recommendation of the terminal device for performing uplink scheduling by the network device; determining a configuration parameter of uplink scheduling based on the recommendation information; and sending the configuration parameter to the terminal device.

In some embodiments of the sixth aspect, the recommendation information includes at least one of the following for uplink grant-free scheduling: periodicity information or time domain offset information.

In some embodiments of the sixth aspect, the recommendation information includes at least one of the following for uplink grant-based scheduling: periodicity information of physical downlink control channel PDCCH monitoring or time domain offset information of PDCCH monitoring.

In some embodiments of the sixth aspect, the recommendation information includes at least one of the following for uplink transmission: a number of repetitions, a modulation and coding scheme MCS, or spectral efficiency of an MCS.

In some embodiments of the sixth aspect, the recommendation information further includes at least one of the following: validity time information, probability information, target information, or reward feedback information.

In some embodiments of the sixth aspect, when executed by the at least one processor, the instructions enable the network device to implement: receiving a radio resource control RRC message from the terminal device. The RRC message includes the recommendation information, and the RRC message is one of the following messages: an RRC connection resume complete message, an RRC setup complete message, an RRC reconfiguration complete message, and an RRC recommendation message.

In some embodiments of the sixth aspect, when executed by the at least one processor, the instructions enable the network device to implement: determining the configuration parameter based on the recommendation information and a load status of the network device.

According to a seventh aspect, a computer-readable storage medium is provided. The computer-readable storage medium stores a computer program, and when the computer program is executed by a processor, operations of the communications method according to any embodiment of the first aspect or the second aspect are implemented.

According to an eighth aspect, a chip is provided. The chip is configured to perform operations of the communications method according to any embodiment of the first aspect or the second aspect.

According to a ninth aspect, a computer program or a computer program product is provided. The computer program or the computer program product is tangibly stored in a computer-readable medium, and includes computer-executable instructions. When executed, the computer-executable instructions enable a device to implement operations of the communications method according to any embodiment of the first aspect or the second aspect.

**BRIEF DESCRIPTION OF DRAWINGS**

Features, advantages, and other aspects of implementations of this disclosure will become more apparent in conjunction with accompanying drawings and with reference to the following detailed descriptions. Several implementations of this disclosure are illustrated herein by way of example rather than limitation, in which:

FIG. 1 is a schematic diagram of a communications environment 100 in which embodiments of this disclosure may be implemented;
FIG. 2 is a schematic interaction diagram of a communications method 200 according to an embodiment of this disclosure;
FIG. 3 is a schematic diagram of a case 300 in which a terminal device determines that a periodicity of grant-free scheduling does not meet a service feature according to an embodiment of this disclosure;
FIG. 4 is a schematic diagram of a case 400 in which a terminal device determines that a periodicity of PDCCH monitoring of grant-based scheduling does not meet a service feature according to an embodiment of this disclosure;
FIG. 5 is a schematic block diagram of a communications apparatus 500 according to an embodiment of this disclosure;
FIG. 6 is a schematic block diagram of a communications apparatus 600 according to an embodiment of this disclosure; and
FIG. 7 is a simplified block diagram of an example device 700 according to an embodiment of this disclosure.

In the accompanying drawings, the same or similar reference numerals indicate the same or similar elements.

**DESCRIPTION OF EMBODIMENTS**

Embodiments of this disclosure are described in more detail below with reference to accompanying drawings. Although some embodiments of this disclosure are shown in accompanying drawings, it should be understood that this disclosure may be implemented in various forms and should not be construed as limited to the embodiments set forth herein, but rather are provided for a more thorough and complete understanding of this disclosure. It should be understood that the accompanying drawings and embodiments of this disclosure are merely used as examples, but are not intended to limit the protection scope of this disclosure.

In descriptions of embodiments of this disclosure, the term "including" and similar terms should be understood as an open inclusion, that is, "including but not limited to". The term "based on" should be understood as "based at least in part on". The term "one embodiment" or "this embodiment" should be understood as "at least one embodiment". The terms "first", "second", and the like may refer to different objects or a same object. Other explicit and implicit definitions may be included below.

Embodiments of this disclosure may be implemented based on any appropriate communications protocol, including but not limited to a cellular communications protocol such as a 3rd generation (3rd Generation, 3G), a 4th generation (4th generation, 4G), or a 5th generation (5th Generation, 5G), a wireless local area network communications protocol such as the Institute of Electrical and Electronics Engineers (Institute of Electrical and Electronics Engineers,

IEEE) 802.11, and/or any other protocol currently known or developed in the future.

Technical solutions of embodiments of this disclosure may be applied to any appropriate communications system, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications service (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronous code division multiple access (Time Division-Synchronous Code Division Multiple Access, TD-SCDMA) system, a frequency division duplex (Frequency Division Duplex, FDD) system, a time division duplex (Time Division Duplex, TDD) system, a narrowband internet of things (Narrowband Internet Of Things, NB-IoT) communications system, a 5th generation (5G) system, or three major application scenarios of new radio (New Radio, NR): enhanced mobile broadband (Enhanced Mobile Broadband, eMBB), ultra-reliable and low-latency communications (Ultra-Reliable And Low-Latency Communications, URLLC), and enhanced machine type communication (Enhanced Machine Type Communication, eMTC).

It may be understood that the technical solutions in this disclosure relate to a network device, and the network device may include an access network device. The access network device is an apparatus that is deployed in a radio access network to provide a wireless communications function for a mobile terminal, and may be, for example, a radio access network (Radio Access Network, RAN) network device. The access network device may include various forms of base stations, for example, a macro base station, a micro base station (also referred to as a small cell), a relay station, an access point, a remote radio unit (Remote Radio Unit, RRU), a radio head (Radio Head, RH), or a remote radio head (Remote Radio Head, RRH). The network device may have different names in systems that use different radio access technologies, for example, referred to as an evolved NodeB (evolved NodeB, eNB, or eNodeB) in a long term evolution (Long Term Evolution, LTE) system, referred to as a NodeB (NodeB, NB) in a 3G system, and referred to as a g NodeB (gNB) or an NR NodeB (NR NB) in a 5G network. In some scenarios, the network device may include a central unit (Central Unit, CU) and a distributed unit (Distributed Unit, DU). The CU and the DU may be placed in different places. For example, the DU is deployed remotely in an area with heavy traffic, and the CU is deployed in a central equipment room. Alternatively, the CU and the DU may be placed in a same equipment room. Alternatively, the CU and the DU may be different components in one rack. For ease of description, in subsequent embodiments of this disclosure, the foregoing apparatuses that provide a wireless communications function for a mobile terminal are collectively referred to as a network device, and the network device in this disclosure may also refer to an access network device, which are not deliberately distinguished below.

It may be understood that the technical solutions of this disclosure relate to a mobile terminal, and optionally, the mobile terminal may also be referred to as a mobile station (Mobile Station, MS). The mobile terminal in this disclosure may include various handheld devices, in-vehicle devices, wearable devices, computing devices, or other processing devices connected to a wireless modem that have a wireless communications function. The mobile terminal in this disclosure may also be referred to as a terminal (terminal) or user equipment (User Equipment, UE), and may be a subscriber unit (subscriber unit), a cellular phone (cellular phone or cell phone), a smartphone (smartphone), a wireless data card, a personal digital assistant (Personal Digital Assistant) computer, a tablet computer, a wireless modem (modem), a handset (handset), a laptop computer (laptop computer), a machine type communication (Machine Type Communication, MTC) terminal, or the like. The terminal device in this disclosure may have uplink traffic to be transmitted to the network device. In some cases, the terminal device may further receive downlink traffic from the network device. An uplink traffic volume of the terminal device may be greater than or basically equal to a downlink traffic volume. For example, the terminal device may be a terminal device performing a live broadcast service or a terminal device in a vertical industry.

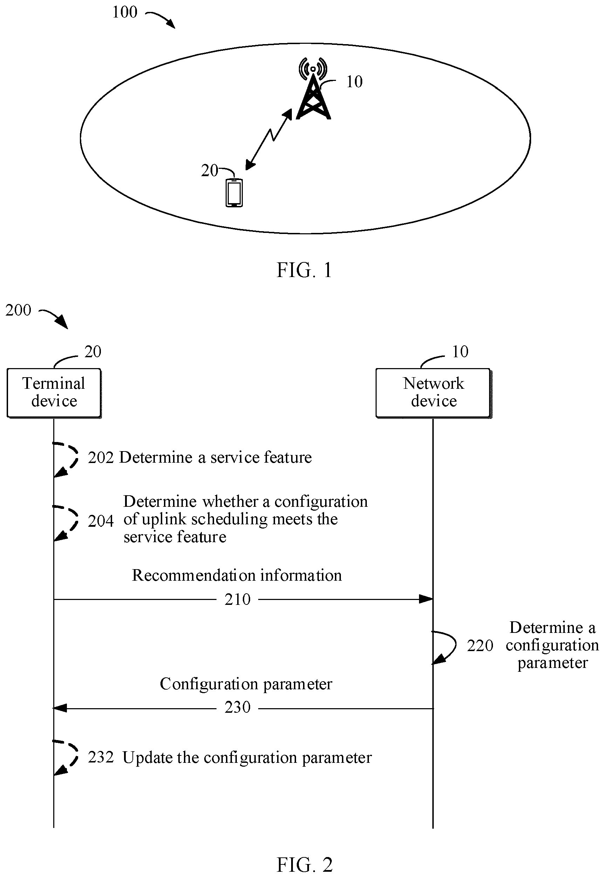

FIG. 1 is a schematic diagram of a communications environment 100 in which embodiments of this disclosure may be implemented. As shown in FIG. 1, the communications environment 100 includes a network device 10 and a terminal device 20. The network device 10 and the terminal device 20 may communicate with each other.

The communications environment 100 may include any appropriate number of devices and cells. In the communications environment 100, the terminal device 20 and the network device 10 may communicate data and control information with each other. It should be understood that the numbers of devices shown in FIG. 1 and connections between the devices are given for a purpose of illustration, and are not limited. The communications environment 100 may include any appropriate number of devices and networks suitable for implementing embodiments of this disclosure.

Communication in the communications environment 100 may be implemented based on any appropriate communications protocol, including but not limited to a 1st generation cellular communications protocol (1G), a 2nd generation cellular communications protocol (2G), a 3rd generation cellular communications protocol (3G), a 4th generation cellular communications protocol (4G), a 5th generation cellular communications protocol (5G), a wireless local area network communications protocol such as the Institute of Electrical and Electronics Engineers (IEEE) 802.11, and/or any other protocol currently known or developed in the future. In addition, communication may use any appropriate wireless communications technology, including but not limited to code division multiple access (Code Division Multiple Access, CDMA), frequency division multiple access (Frequency Division Multiple Access, FDMA), time division multiple access (Time Division Multiple Access, TDMA), frequency division duplex (Frequency Division Duplex, Duplex FDD), time division duplex (Time Division Duplex, TDD), multiple-input multiple-output (Multiple-Input Multiple-Output, MIMO), orthogonal frequency division multiplexing (Orthogonal Frequency Division Multiplexing, OFDM), discrete Fourier transform-spread-OFDM (Discrete Fourier Transform-spread-OFDM, DFT-s-OFDM), and/or any other technology currently known or developed in the future.

A mode in which the network device schedules an uplink transmission resource of the terminal device includes a grant-based scheduling mode and a grant-free scheduling mode.

In the grant-based scheduling mode, the network device notifies the terminal device of a time-frequency resource for uplink transmission by using a physical downlink control channel (Physical Downlink Control Channel, PDCCH). Before that, the network device needs to preconfigure a periodicity of PDCCH monitoring and a time domain offset of PDCCH monitoring, so that the terminal device determines a transmission occasion of the PDCCH in time domain. However, a service feature of uplink transmitted data on the terminal device may change. When the periodicity of PDCCH monitoring and the time domain offset of PDCCH monitoring that are preconfigured by the network device do not match the service feature, a delay of the uplink transmitted data on the terminal device may increase. It may be understood that "monitoring (monitor)" may also be referred to as another action such as listening, detection, blind detection, sensing, or the like. This is not limited in this disclosure.

In the grant-free scheduling mode, the network device preconfigures, by using radio resource control (Radio Resource Control, RRC), a grant-free periodicity for performing uplink transmission by the terminal device. However, a service feature of uplink transmitted data on the terminal device may change. When the grant-free periodicity preconfigured by the network device does not match the service feature, a delay of the uplink transmitted data on the terminal device may increase.

Example embodiments of this disclosure are discussed in detail below with reference to accompanying drawings. In the following description of an example method procedure in FIG. 2, for ease of discussion, example embodiments of this disclosure are described with reference to the example communications environment in FIG. 1. It should be understood that example embodiments of this disclosure may be similarly applied to other communications environments.

FIG. 2 is a schematic interaction diagram of a communications method 200 according to an embodiment of this disclosure. FIG. 2 includes the network device 10 and the terminal device 20. It may be understood that a communications process shown in FIG. 2 is merely an example, rather than limitative. Embodiments of this disclosure may include exchanged signaling that is not shown in FIG. 2, or some signaling shown in FIG. 2 may be omitted.

As shown in FIG. 2, the terminal device 20 may send 210 recommendation information to the network device 10. The recommendation information indicates a recommendation of the terminal device 20 for performing uplink scheduling by the network device 10.

In some embodiments, the terminal device 20 may send an RRC message to the network device 10. The RRC message includes the recommendation information. In other words, the recommendation information may be included in an RRC message, or the recommendation information may be sent by using an RRC message. Optionally, the RRC message may be any RRC message before the 3GPP standard release 16 (R16). Alternatively, the RRC message may be any RRC message in or after R16.

In an embodiment, the RRC message may be an RRC connection resume complete (RRC Connection Resume Complete) message. In other words, the terminal device 20 may send 210 an RRC connection resume complete message to the network device 10, and the RRC connection resume complete message includes the recommendation information.

In another embodiment, the RRC message may be an RRC setup complete (RRC Setup Complete) message. In other words, the terminal device 20 may send 210 an RRC setup complete message to the network device 10, and the RRC setup complete message includes the recommendation information.

In still another embodiment, the RRC message may be an RRC reconfiguration complete (RRC Reconfiguration Complete) message. In other words, the terminal device 20 may send 210 an RRC reconfiguration complete message to the network device 10, and the RRC reconfiguration complete message includes the recommendation information.

In some embodiments, an RRC message may be newly defined to send the recommendation information. For example, the newly defined RRC message may be an RRC recommendation (RRC Recommendation) message, an AI assistance message, or another message. In an embodiment, the RRC message may be an RRC recommendation (RRC Recommendation) message. In other words, the terminal device 20 may send 210 an RRC recommendation message to the network device 10, and the RRC recommendation message includes the recommendation information.

For example, when the terminal device 20 sends the recommendation information 210 by using the RRC message, the recommendation information may be carried in one or more specific fields of the RRC message. In some embodiments, the specific field may be a reserved field, a newly defined field, an existing field, or the like. In an example, the recommendation information may be transmitted by using a reserved field in the RRC message. In another example, the recommendation information may be transmitted by using an existing field in the RRC message, for example, a UE assistance information field (UEAssistanceInformation). In still another example, the recommendation information may be transmitted by using a newly defined additional field in the RRC message, which may be, for example, an additionally defined AI assistance information field in the RRC recommendation message or the AI assistance message.

In this way, in this disclosure, the recommendation information is transmitted by using the RRC message, so that an existing RRC format can be fully utilized, and the network device 10 can accurately obtain the recommendation information in a timely manner.

It should be understood that although the recommendation information is transmitted by using the RRC message above, this disclosure is not limited thereto. For example, the recommendation information may be sent by using another RRC message or by using another control message other than the RRC message. This is not limited in this disclosure.

Based on different modes of performing uplink scheduling by the network device 10, two different implementations are discussed in this disclosure. One implementation is for the grant-free scheduling mode, and the other implementation is for the grant-based scheduling mode.

In the implementation for the grant-free scheduling mode, the network device 10 may configure, in advance for the terminal device 20 by using RRC signaling, a parameter used in the grant-free scheduling mode. The parameter includes at least a periodicity of grant-free scheduling.

The grant-free scheduling mode may include two types. A type 1 is grant-free scheduling that takes effect immediately after the RRC configuration, and a type 2 is grant-free scheduling that can take effect only when DCI activation is performed after the RRC configuration.

Specifically, the network device 10 may indicate a type in a specific field in the RRC signaling. For example, the RRC signaling may be an information element (Information Element, IE) configured grant configuration (IE ConfiguredGrantConfig), and the specific field may be an RRC configured uplink grant (rrc-ConfiguredUplinkGrant). For example, if rrc-ConfiguredUplinkGrant is configured, it indicates the type 1. If rrc-ConfiguredUplinkGrant is not configured, it indicates the type 2.

The parameter for grant-free scheduling that is configured by the network device 10 includes at least a periodicity (periodicity). In some embodiments, the parameter may further include at least one of the following for uplink transmission: a number of hybrid automatic repeat request (Hybrid Automatic Repeat reQuest, HARQ) processes (nrofHARQ-Processes), power control, a number of repetitions (repK), a repeated redundancy version (repK-RV), or the like. In addition, for the type 1, the parameter may further include: a time domain resource, a frequency domain resource, a modulation and coding scheme (Modulation and Coding Scheme, MCS), an antenna port, an SRS resource indicator, a demodulation reference signal (Demodulation Reference Signal, DMRS), or the like. For the type 2, downlink control information (Downlink Control Information, DCI) scrambled by a configured scheduling radio network temporary identifier (Configured Scheduling Radio Network Temporary Identifier, CS-RNTI) indicates activation, and carries a related parameter such as a time domain resource, a frequency domain resource, or a modulation and coding scheme (MCS).

A parameter periodicity (periodicity) is configured for both the type 1 and the type 2. Therefore, the terminal device 20 periodically transmits uplink data on a physical uplink shared channel (Physical Uplink Shared Channel, PUSCH).

Specifically, for the type 1, a time domain offset (timeDomainOffset) may be further configured in the RRC signaling, so that the terminal device 20 can determine an uplink transmission location in each periodicity by using the time domain offset. For example, a transmission location in an $N^{th}$ grant-free periodicity may be represented as follows:

$$[(SFN \times numberOfSlotsPerFrame \times numberOfSymbolsPerSlot) + (slot\ number\ in\ the\ frame \times numberOfSymbolsPerSlot) + symbol\ number\ in\ the\ slot] = (timeDomainOffset + N \times periodicity)\ modulo\ (1024 \times numberOfSlotsPerFrame \times numberOfSymbolsPerSlot),$$

where SFN represents a system frame number, *numberOfSlotsPerFrame* represents the number of slots in each frame, *numberOfSymbolsPerSlot* represents the number of symbols in each slot, *slot number in the frame* represents a slot location in the frame, *symbol number in the slot* indicates a symbol location in the slot, *periodicity* indicates a periodicity, *timeDomainOffset* indicates a time domain offset, and *modulo* indicates a modulo operation.

For the type 2, the terminal device 20 can determine an uplink transmission location in each periodicity based on a parameter included in the DCI activation. For example, a transmission location in an $N^{th}$ grant-free periodicity may be represented as follows:

$$[(SFN \times numberOfSlotsPerFrame \times numberOfSymbolsPerSlot) + (slot\ number\ in\ the$$

$$frame \times numberOfSymbolsPerSlot) + symbol\ number\ in\ the\ slot] = [(SFN_{start\ time} \times$$

$$numberOfSlotsPerFrame \times numberOfSymbolsPerSlot + slot_{start\ time} \times numberOfSymbolsPerSlot$$

$$+ symbol_{start\ time}) + N \times periodicity]\ modulo\ (1024 \times numberOfSlotsPerFrame \times$$

$$numberOfSymbolsPerSlot),$$

where SFNrepresents a system frame number, *numberOfSlotsPerFrame* represents the number of slots in each frame, *numberOfSymbolsPerSlot* represents the number of symbols in each slot, *slot number in the frame* represents a slot location in the frame, *symbol number in the slot* indicates a symbol location in the slot, *periodicity* indicates a periodicity, $SFN_{start\ time}$, $slot_{start\ time}$, and $symbol_{start\ time}$ respectively indicate a system frame number, a slot, and a symbol of the first uplink transmission of the terminal device 20 after the DCI activation, and *modulo* indicates a modulo operation.

In the implementation for grant-free scheduling, the recommendation information may include periodicity information and/or time domain offset information for uplink grant-free scheduling.

Additionally or alternatively, before step 210 in FIG. 2, the method may further include a process in which the terminal device 20 determines and generates the recommendation information. As shown in FIG. 2, the terminal device 20 may determine 202 a service feature of uplink data to be transmitted, and determine 204 whether a configuration of uplink scheduling meets the service feature. Further, if determining that the service feature is not met, the terminal device 20 sends 210 the recommendation information.

In the implementation for grant-free scheduling, the terminal device 20 may determine 204 whether the parameter of grant-free scheduling meets the service feature. Correspondingly, the recommendation information may include periodicity information and/or time domain offset information for grant-free scheduling.

In some embodiments, the service feature of the uplink data to be transmitted may be determined by using a service prediction algorithm. Optionally, the service prediction algorithm used by the terminal device 20 may be an artificial intelligence (Artificial Intelligence, AI) algorithm, for example, may be a conventional machine learning algorithm or deep learning algorithm.

Generally, machine learning may be classified into three types based on training methods: supervised learning, unsupervised learning, and reinforcement learning. Supervised learning means giving the algorithm a data set and a correct answer (labeling data). A machine uses the data to learn a processing method of the correct answer. Such a manner of helping the machine in learning through a lot of manual labeling is supervised learning. This learning manner is effective, but costs much. In unsupervised learning, there is no "correct answer" for a given data set, and all data is equal. A task of unsupervised learning is to mine a potential structure from the given data set. Reinforcement learning is closer to essence of biological learning, and therefore is expected to achieve higher intelligence. Reinforcement learning focuses on how an agent takes a series of behavior in an environment to maximize a cumulative return. Through reinforcement learning, the agent should know behavior that should be taken in a state. In reinforcement learning (Reinforcement Learning), there are two types of methods. One is value-based (Value-based), and the other is policy-based (Policy-based). An actor-critic (Actor-Critic) method may be obtained by combining the two. Therefore, a policy gradient (Policy Gradient) method uses an actor-critic framework, the actor models a policy, and the critic models a value function. In policy-based reinforcement learning, a policy generates probabilities corresponding to a series of actions in a discrete action space, and generates a probability density of a continuous action space for a continuous space. An action corresponding to a maximum probability or probability density generated by the policy may be executed with a high probability (to implement a maximum cumulative return obtained by using the policy), and then an action corresponding to a randomly selected probability may be executed with a low probability (a new action explored may achieve a higher cumulative return).

In some embodiments, the service prediction algorithm may determine, based on historical data of the terminal device 20 by using a method such as regression analysis, the service feature of the uplink data to be transmitted.

In a process in which a user uses the terminal device 20, uplink data transmitted by using the terminal device 20 shows a regularity. For example, a number of users is positively correlated to a behavior pattern of using an application (APP) on the terminal device 20 by the user, which has a regularity. For example, a data amount on weekends is greater than that on weekdays, a data amount at night is greater than that in daytime, and a daily traffic volume fluctuates, including a peak and a valley. Therefore, it is feasible to predict uplink transmitted traffic in real time by using historical data.

Regression (regression) is a method that mainly performs prediction based on a "mean value" of historical data (for example, over a period of time in the past). It may be understood that regression may be implemented in many manners, including but not limited to linear regression (Linear Regression), logistic regression (Logistic Regression), polynomial regression (Polynomial Regression), stepwise regression (Stepwise Regression), ridge regression (Ridge Regression), lasso regression (Lasso Regression), elasticnet regression (ElasticNet Regression), or the like. Regression is essentially curve fitting, which predicts a "conditional mean value" of different models. However, in regression analysis, a desire for unbiased prediction of historical data may fail to guarantee accuracy of predicted future data.

In some embodiments, the service prediction algorithm may determine, based on historical data of the terminal device 20 by using a machine learning algorithm, the service feature of the uplink data to be transmitted. The machine learning algorithm may be a conventional machine learning algorithm or deep learning algorithm.

Different from regression analysis, the machine learning algorithm does not pursue accuracy of a mean value when prediction is performed, which allows a deviation, but aims to reduce a variance. As a data amount grows continuously and computing power increases continuously, an effect of performing prediction by using the machine learning algorithm is better than that of another method. The machine learning algorithm may also be referred to as an AI prediction algorithm, a traffic prediction algorithm, or the like, and may include a deep learning algorithm based on a neural network. The neural network includes but is not limited to a back propagation network (Back Propagation Network), an Elman neural network, a long short term memory (Long Short Term Memory) neural network, or the like.

For example, a training data set may be constructed by using historical data, and the training data set includes a large volume of training data. Subsequently, training is performed based on the training data set, to obtain a neural network structure that converges or meets a training end condition (for example, defined by using a loss function). In some examples, a validation set may be further constructed for validation on the trained neural network. Therefore, the trained neural network may be used to perform service prediction, to obtain the service feature of the uplink data to be transmitted.

The AI algorithm performs training based on a large volume of data, and includes a large number of training parameters to comprehensively consider various possible factors. Therefore, in this disclosure, when the terminal device 20 determines the service feature by using the AI algorithm, various factors can also be fully considered, so that the determined service feature is more accurate and is reliable. This prevents inaccurate prediction from causing inaccurate resource allocation and affecting resource utilization.

The service feature may also be referred to as a service status or another name, and may indicate some service attributes related to service transmission. The service status may include, for example, a time of arrival, an arrival periodicity, a transport packet size, and/or service transmission channel quality. It should be understood that the foregoing examples of the service status are merely illustrative, rather than limitative, and the service status may further include other service-related information.

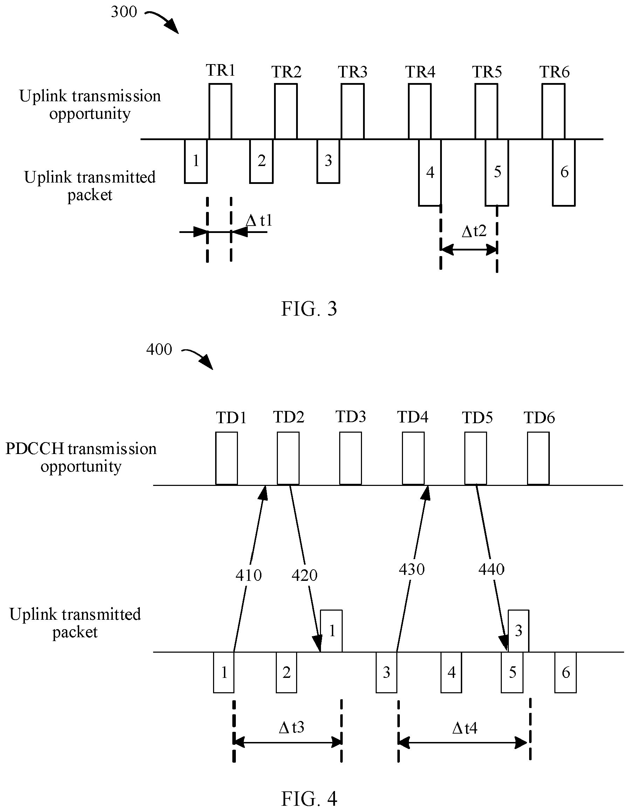

FIG. 3 is a schematic diagram of a case 300 in which the terminal device 20 determines that a periodicity of grant-free scheduling does not meet a service feature according to an embodiment of this disclosure. As shown in FIG. 3, the network device 10 preconfigures a periodicity of grant-free scheduling, and correspondingly, grant-free uplink transmission (Transmission, TR) occasions are represented as TR1, TR2, ..., TR6, and the like. Uplink data transmitted by the terminal device 20 to the network device 10 includes a packet 1, a packet 2, a packet 3, ..., a packet 6, and the like. The terminal device 20 may determine, in a process of transmitting the packet 1 and the packet 2, a service feature of subsequent uplink data to be transmitted, and determine whether the periodicity of grant-free scheduling meets the service feature.

For example, the terminal device 20 may determine that a time of arrival of the uplink data to be transmitted changes (for example, later), but an arrival periodicity does not change. In this case, based on the preconfigured periodicity of grant-free scheduling, a waiting time for performing uplink service transmission may increase. As a result, an uplink transmission delay increases.

As shown in FIG. 3, uplink transmission is performed at the uplink transmission occasion TR1 for the packet 1 at the terminal device 20. Similarly, uplink transmission is performed at the uplink transmission occasion TR2 for the packet 2, and uplink transmission is performed at the uplink transmission occasion TR3 for the packet 3. In the uplink transmission of the packet 1 to the packet 3, a waiting time for each transmission is $\Delta t1$. In some embodiments, in a process of transmitting the packet 1 to the packet 3, the terminal device 20 may determine, in a manner such as prediction, that a time of arrival of the packet 4 is delayed, that is, a time interval between the time of arrival of the packet 4 and a time of arrival of the packet 3 is greater than a time interval between those of the packet 3 and the packet 2. In this case, after the packet 4 arrives, uplink transmission can be performed only at the uplink transmission occasion TR5 at the earliest. After that, although the packet arrival periodicity does not change, a waiting time for each packet becomes longer, for example, becomes $\Delta t2$. Therefore, the terminal device 20 may determine that a transmission delay after the packet 4 increases. Therefore, the terminal device 20 may determine that the periodicity of grant-free scheduling does not meet the service feature.

For another example, the terminal device 20 may determine that an arrival periodicity of the uplink data to be transmitted changes (for example, increases or decreases). In this case, based on the preconfigured periodicity of grant-free scheduling, a waiting time for performing uplink service transmission may increase. As a result, an uplink transmission delay increases. This example is similar to the case in FIG. 3, and is not described in detail herein.

It may be understood that only some examples are provided above, which are not limitative, and there may be other cases in which a periodicity of grant-free scheduling cannot meet a service feature of uplink data to be transmitted, which are not listed one by one herein.

For example, the terminal device 20 may generate the recommendation information based on the determined service feature of the uplink data to be transmitted and the periodicity of grant-free scheduling, and further send 210 the recommendation information to the network device 10.

In some embodiments, the recommendation information may include periodicity information for uplink grant-free scheduling. The recommendation information may indicate an update recommendation of the terminal device 20 for the periodicity of uplink grant-free scheduling. Optionally, the periodicity information may be a specific periodicity value in the number of slots, the number of symbols, or others. The periodicity information may be carried in a periodicity preference field (periodicityPreference). For example, for a value range of the periodicity information, sym2, sym7, sym1*14, sym2*14, ..., or sym5120*14 may be used to respectively indicate that the periodicity information is 2 symbols, 7 symbols, 1*14 symbols, 2*14 symbols, ..., or 5120* 14 symbols. Optionally, the periodicity information may be periodicity increase or decrease indication information, and may be represented in a manner such as a choice (CHOICE) structure or an enumerate (ENUMERATE) structure. This is not limited in this disclosure.

In some embodiments, for the type 1 in grant-free scheduling, the recommendation information may include time domain offset information for uplink grant-free scheduling. The recommendation information may indicate an update recommendation of the terminal device 20 for the time domain offset of uplink grant-free scheduling. Optionally, the time domain offset information may be a specific time domain offset value in the number of slots, the number of symbols, or others. The time domain offset information may be carried in a time domain offset preference field (timeDomainOffset-Preference). For example, the time domain offset may be preset in the number of symbols. In this case, for a value range of the time domain offset, refer to a range in a downlink configuration. For example, an integer INTEGER (0..5119) respectively indicates that the time domain offset is (0..5119) symbols. Optionally, the time domain offset information may be offset increase or decrease indication information, and may be represented in a manner such as a choice (CHOICE) structure or an enumerate (ENUMERATE) structure. This is not limited in this disclosure.

The implementation for the grant-free scheduling mode is described above, and the implementation for grant-based scheduling is similarly described below.

In the implementation for the grant-based scheduling mode, when the terminal device 20 has to-be-transmitted uplink data, the terminal device 20 needs to first request an uplink transmission resource from the network device 10, and then the network device 10 performs scheduling based on the request.

Specifically, when the terminal device 20 has to-be-transmitted uplink data, if the terminal device 20 already has a physical uplink control channel (Physical Uplink Control Channel, PUCCH) transmission resource, the terminal device 20 sends a scheduling request (Scheduling Request, SR) to the network device 10 by using a PUCCH. If the terminal device 20 has no PUCCH transmission resource, the terminal device 20 sends a scheduling request (SR) to the network device 10 by using a physical random access channel (Physical Random Access Channel, PRACH). The SR notifies the network device 10 that the terminal device 20 has to-be-transmitted uplink data. Optionally, the terminal device 20 may further notify the network device 10 of a data amount of the to-be-transmitted uplink data by using a buffer status report (Buffer State Report, BSR).

After receiving the SR and/or the BSR, the network device 10 may schedule a physical uplink shared channel (Physical Uplink Shared Channel, PUSCH), and indicate a transmission resource of the PUSCH by using uplink scheduling grant downlink control information (Downlink Control Information, DCI) in a PDCCH. However, the transmission performed by using the PDCCH is limited by a PDCCH time-frequency location that can be monitored by the terminal device 20.

Generally, the network device 10 may notify the terminal device 20 of a periodicity of PDCCH monitoring and a time domain offset of PDCCH monitoring by using a preconfiguration. The periodicity of PDCCH monitoring may indicate an interval between two adjacent PDCCH transmission occasions. The time domain offset of PDCCH monitoring may indicate an offset relative to a reference start point of a periodicity during one transmission, and is used to determine a specific transmission location. The terminal device 20 may monitor, based on the configuration and at the determined time-frequency resource location for monitoring the PDCCH, the PDCCH delivered by the network device 10. Therefore, the terminal device 20 can learn, based on the uplink scheduling grant DCI in the PDCCH, the transmission resource of the PUSCH that is indicated by the network device 10.

In the implementation for grant-based scheduling, the recommendation information may include periodicity information of PDCCH monitoring and/or time domain offset information of PDCCH monitoring for uplink grant-based scheduling.

Additionally or alternatively, before step 210 in FIG. 2, the method may further include a process in which the terminal device 20 determines and generates the recommendation information. As shown in FIG. 2, the terminal device 20 may determine 202 a service feature of uplink data to be transmitted, and determine 204 whether a configuration of uplink scheduling meets the service feature. Further, if determining that the service feature is not met, the terminal device 20 sends 210 the recommendation information.

In the implementation for grant-based scheduling, the terminal device 20 may determine 204 whether the parameter of grant-based scheduling meets the service feature. Correspondingly, the recommendation information may include periodicity information of PDCCH monitoring and/or time domain offset information of PDCCH monitoring for uplink grant-based scheduling.

In some embodiments, the service feature of the uplink data to be transmitted may be determined by using a service prediction algorithm. Optionally, the service prediction algorithm used by the terminal device 20 may be an AI algorithm, for example, may be a conventional machine learning algorithm or deep learning algorithm. For the service prediction algorithm, refer to the related description in the foregoing implementation. Details are not repeated herein.

FIG. 4 is a schematic diagram of a case 400 in which the terminal device 20 determines that a periodicity of PDCCH monitoring of grant-based scheduling does not meet a service feature according to an embodiment of this disclosure. As shown in FIG. 4, the network device 10 preconfigures a periodicity of PDCCH monitoring, and correspondingly, PDCCH transmission occasions are represented as TD1, TD2, ..., TD6, and the like. Uplink data transmitted by the terminal device 20 to the network device 10 includes a packet 1, a packet 2, a packet 3, ..., a packet 6, and the like. The terminal device 20 may determine, in a process of transmitting the packet 1 and the packet 2, a service feature of subsequent uplink data to be transmitted, and determine whether the periodicity of PDCCH monitoring meets the service feature.

For example, the terminal device 20 may determine that a time of arrival of the uplink data to be transmitted changes (for example, later), but an arrival periodicity does not change. In this case, based on the preconfigured periodicity of PDCCH monitoring, a waiting time for performing uplink service transmission may increase. As a result, an uplink transmission delay increases.

As shown in FIG. 4, when the packet 1 at the terminal device 20 needs to be transmitted, the terminal device 20 may send 410 an SR or a BSR to the network device 10. Subsequently, at the PDCCH transmission occasion TD2, the terminal device 20 may receive 420 a PUSCH transmission resource configured by the network device 10, and perform uplink transmission on the packet 1. A delay for transmission of the packet 1 is shown in FIG. 4 as $\Delta t3$. Similarly, uplink transmission may be performed on the packet 2. In some embodiments, in the process of transmitting the packet 1 and the packet 2, the terminal device 20 may determine, in a manner such as prediction, that a time of arrival of the packet 3 is delayed, that is, a time interval between the time of arrival of the packet 3 and a time of arrival of the packet 2 is greater than a time interval between those of the packet 2 and the packet 1. In this case, after the packet 3 arrives, the terminal device 20 may send 430 an SR or a BSR to the network device 10. However, because the packet 3 arrives relatively late, and the configured periodicity of PDCCH monitoring remains unchanged, after 430, the terminal device 20 needs to wait until the PDCCH transmission occasion TD5 arrives, then receives 440 a PUSCH transmission resource configured by the network device 10, and performs uplink transmission on the packet 3. A delay for transmission of the packet 3 is shown in FIG. 4 as $\Delta t4$. That is, the terminal device 20 predicts that a transmission delay after the packet 3 increases. Therefore, the terminal device 20 may determine that the periodicity of PDCCH monitoring does not meet the service feature.

It may be understood that only some examples are provided above, which are not limitative, and there may be other cases in which a parameter of grant-based scheduling cannot meet a service feature of uplink data to be transmitted, which are not listed one by one herein.

For example, the terminal device 20 may generate the recommendation information based on the determined service feature of the uplink data to be transmitted and the periodicity and/or the time domain offset of PDCCH monitoring, and further send 210 the recommendation information to the network device 10. In this implementation, the recommendation information may indicate a recommendation of the terminal device 20 for a PDCCH configuration. The recommendation information may include periodicity information of PDCCH monitoring and/or time domain offset information of PDCCH monitoring. The periodicity information of PDCCH monitoring indicates a recommendation of the terminal device for a "periodicity of PDCCH monitoring". The time domain offset information of PDCCH monitoring indicates a recommendation of the terminal device for a "time domain offset" in each "periodicity of PDCCH monitoring". It may be understood that the time domain offset of PDCCH monitoring is used to determine a specific time domain location of PDCCH monitoring in each monitoring periodicity. Generally, the time domain offset of PDCCH monitoring is less than the periodicity of PDCCH monitoring.

In some embodiments, the recommendation information may include periodicity information of PDCCH monitoring for uplink grant-based scheduling. The recommendation information may indicate an update recommendation of the terminal device 20 for a periodicity of PDCCH monitoring for uplink grant-based scheduling. Optionally, the periodicity information of PDCCH monitoring may be a specific periodicity preference in the number of slots, the number of symbols, or others. Optionally, the periodicity information of PDCCH monitoring may be periodicity increase or decrease indication information of PDCCH monitoring, and may be represented in a manner such as a choice (CHOICE) structure or an enumerate (ENUMERATE) structure. Optionally, time domain offset information of PDCCH monitoring may be obtained by using a preset offset rule, and the preset offset rule may be as follows: A result of performing a modulo operation on an original time domain offset of PDCCH monitoring with respect to an original periodicity of PDCCH monitoring is equal to a result of performing a modulo operation on recommended time domain offset information of PDCCH monitoring with respect to recommended periodicity information of PDCCH monitoring. This is not limited in this disclosure.

In this way, the network device 10 may obtain, by using the recommendation information, the recommendation of the terminal device 20 for the periodicity of PDCCH monitoring. In some embodiments, the network device 10 may determine, based on the recommended periodicity information of PDCCH monitoring and the preset offset rule, the time domain offset information of PDCCH monitoring that is recommended by the terminal device 20. It is assumed that the original periodicity of PDCCH monitoring is represented as T0, the original time domain offset of PDCCH monitoring is represented as $\Delta t01$, and the recommended periodicity information of PDCCH monitoring is represented as T1. In this case, the recommended time domain offset information $\Delta t11$ of PDCCH monitoring may be determined based on MOD(T0, $\Delta t01$)=MOD(T1, $\Delta t11$). MOD is a modulo operation. For example, it is assumed that the original periodicity of PDCCH monitoring is 10 slots, and the original time domain offset of PDCCH monitoring is 8 slots. The terminal device 20 may recommend updating the periodicity of PDCCH monitoring to 5 slots, that is, the recommended periodicity of PDCCH monitoring is 5 slots. In this case, based on the foregoing modulo operation, it may be determined that the recommended time domain offset of PDCCH monitoring is 3 slots.

In some embodiments, the recommendation information may include time domain offset information of PDCCH monitoring for uplink grant-based scheduling. The recommendation information may indicate an update recommendation of the terminal device 20 for a time domain offset of PDCCH monitoring for uplink grant-based scheduling. Optionally, the time domain offset information of PDCCH monitoring may be a specific offset preference in the number of slots, the number of symbols, or others. Optionally, the time domain offset information of PDCCH monitoring may be a recommendation of increasing or decreasing a monitoring time domain offset. This is not limited in this disclosure.

In this way, the network device 10 may obtain, by using the recommendation information, the recommendation of the terminal device 20 for the time domain offset of PDCCH monitoring. In some embodiments, if the recommendation information includes the time domain offset information of PDCCH monitoring, but does not include periodicity information of PDCCH monitoring, the network device 10 may consider that the terminal device 20 does not recommend modifying or updating a periodicity of PDCCH monitoring. That is, an original periodicity of PDCCH monitoring remains unchanged.

In some embodiments, the recommendation information may include periodicity information of PDCCH monitoring and time domain offset information of PDCCH monitoring for uplink grant-based scheduling. In this way, the network device 10 may obtain, by using the recommendation information, recommendations of the terminal device 20 for a periodicity of PDCCH monitoring and a time domain offset of PDCCH monitoring. For example, the recommendations for the two are respectively notified by using a monitoring periodicity preference field and a monitoring time domain offset preference field. Alternatively, a monitoring slot periodicity and offset preference field (monitoringSlotPeriodicityAndOffsetPreference) is used for carrying to notify the recommendations for the two together.

In some embodiments, the recommendation information may be carried in a choice (CHOICE) structure. For example, "sl5" may be used to indicate that the recommended periodicity of PDCCH monitoring is 5 slots (slots). For example, an integer "3" may be used to indicate that the recommended time domain offset of PDCCH monitoring is 3 slots. In some embodiments, the following choice structure may be used for carrying, so that protocol overheads between the terminal device 20 and the network device 10 can be simplified:

```
CHOICE {
    sl1      NULL,
    sl2      INTEGER (0..1),
    sl4      INTEGER (0..3),
    sl5      INTEGER (0..4),
    sl8      INTEGER (0..7),
    sl10     INTEGER (0..9),
    sl16     INTEGER (0..15),
    sl20     INTEGER (0..19),
    sl40     INTEGER (0..39),
    sl80     INTEGER (0..79),
    sl160    INTEGER (0..159),
    sl320    INTEGER (0..319),
    sl640    INTEGER (0..639),
    sl1280   INTEGER (0..1279),
    sl2560   INTEGER (0..2559)
```

where NULL represents empty, sl represents a slot, sl followed by a number (for example, M) indicates that the periodicity of PDCCH monitoring is M slots, INTEGER is an integer, a number (assumed to be p) in parentheses after INTEGER indicates that a time domain offset in the periodicity of PDCCH monitoring is p slots, M is a positive integer, and p is an integer less than M.

Optionally, the time domain offset information of PDCCH monitoring may be monitoring time domain offset increase or decrease indication information, and may be represented in a manner such as a choice (CHOICE) structure or an enumerate (ENUMERATE) structure. This is not limited in this disclosure.

The foregoing separately describes the implementation for grant-free scheduling and the implementation for grant-based scheduling. In the implementation for grant-free scheduling, the recommendation information may include periodicity information and/or time domain offset information for grant-free scheduling. In the implementation for grant-based scheduling, the recommendation information may include periodicity information of PDCCH monitoring and/or time domain offset information of PDCCH monitoring for grant-based scheduling. However, it should be understood that embodiments of this disclosure are not limited thereto. For both the implementation for grant-free scheduling and the implementation for the grant-based scheduling, in some embodiments, the recommendation information may further include other information. The other information in this disclosure may include the following for uplink transmission: a number of repetitions, an MCS, spectral efficiency of an MCS, validity time information, probability information, target information, reward feedback information, or any combination thereof.

In some embodiments, the recommendation information may include the number of repetitions, to indicate a recommendation for the number of retransmissions supported for uplink transmission. Optionally, the number of repetitions may be a specific value of the number of repetitions. The number of repetitions may be carried in a number-of-repetitions preference field (repKPreference). For a value range of the number of repetitions, refer to a range in a downlink configuration. For example, enumerated ENUMERATED {n1, n2, n4, n8} indicates that the number of repetitions is 1, 2, 4, or 8, respectively. Optionally, the number of repetitions may be number-of-repetitions increase or decrease indication information, and may be represented in a manner such as a choice (CHOICE) structure or an enumerate (ENUMERATE) structure. This is not limited in this disclosure.

In some embodiments, the recommendation information may include a modulation and coding scheme (Modulation and Coding Scheme, MCS), to indicate a recommendation for an MCS of uplink transmission. Optionally, the MCS may be a specific MCS value. The MCS may be carried in an MCS and transport block size (Transport Block Size, TBS) preference field (mcsAndTBSPreference). For a value range of the MCS, refer to a range in a downlink configuration, for example, an integer INTEGER (0..31). Optionally, the MCS may be MCS increase or decrease indication information, and may be represented in a manner such as a choice (CHOICE) structure or an enumerate (ENUMERATE) structure, to obtain an actually transmitted transport block size (Transmission Block Size, TBS). This is not limited in this disclosure.

In some embodiments, the recommendation information may include spectral efficiency of an MCS, to indicate a recommendation for spectral efficiency of an MCS of uplink transmission. Optionally, the spectral efficiency of the MCS may be a specific MCS table, and the spectral efficiency of the MCS may be carried in an MCS table preference field (mcs-TablePreference). For a value range of the spectral efficiency of the MCS, refer to a range in a downlink configuration. For example, ENUMERATED {qam256, qam64LowSE} may respectively represent quadrature amplitude modulation (Quadrature Amplitude Modulation, QAM) 256 and quadrature amplitude modulation (Quadrature Amplitude Modulation, QAM) 64 low spectral efficiency (Spectral Efficiency, SE). Optionally, the spectral efficiency of the MCS may be spectral efficiency increase or decrease indication information, and may be represented in a manner such as a choice (CHOICE) structure or an enumerate (ENUMERATE) structure. This is not limited in this disclosure.

In some embodiments, the recommendation information may include a recommendation for an uplink transmission resource scheduled by the network device 10. For example, the recommendation information may include at least one of redundancy version information, demodulation reference signal information, power control, or other information, which is not listed one by one in embodiments of this disclosure.

In some embodiments, additionally, the recommendation information may further include: validity time information, probability information, target information, reward feedback information, or any combination thereof.

In this way, when receiving the recommendation information, the network device 10 may also obtain some reference information used when the terminal device 20 determines the recommendation information, so that the network device 10 can determine a configuration parameter by considering more comprehensive reference information, thereby improving accuracy.

In some embodiments, the recommendation information may further include validity time information, to indicate a validity time of the recommendation for uplink scheduling. That is, after the validity time expires, the recommendation information may be considered invalid or having no reference value. Specifically, when prediction is performed by using the AI algorithm, a validity time corresponding to (1) the periodicity information and/or the time domain offset information for uplink grant-free scheduling or (2) the periodicity information of PDCCH monitoring and/or the time domain offset information of PDCCH monitoring for uplink grant-based scheduling may be obtained. For example, the validity time information may be carried in an enumerate (ENUMERATE) structure. It may be understood that the validity time information may alternatively be carried in another similar or completely different structure. This is not limited in this disclosure. For example, an enumerate structure m0.1, m0.2, m0.5, m1, m2, m4, m8, or m10 may be used to respectively indicate a validity time of 0.1 minute (minute), 0.2 minute, 0.5 minute, 1 minute, 2 minutes, 4 minutes, 8 minutes, or 10 minutes.

In some embodiments, the recommendation information may further include probability information, to indicate confidence in the recommendation for uplink scheduling. Specifically, when performing prediction by using the AI algorithm, the terminal device 20 may obtain a plurality of prediction results and probability information corresponding to the plurality of prediction results.

The implementation for uplink grant-free scheduling is used as an example. For example, the terminal device 20 may determine periodicity information T11 and corresponding probability information P11, and periodicity information T12 and corresponding probability information P12. For another example, the terminal device 20 may determine periodicity information T11 and time domain offset information $\Delta$T21, and corresponding probability information P21. For example, the recommendation information may include a preset number of groups with maximum probability information. For example, the preset number is N1. In this case, the probability information may be sorted in descending order, to obtain the first N1 groups as the recommendation information. An example is shown in Table 1.

**Table 1**

| Recommendation for uplink grant-free scheduling | Probability information |
|---|---|
| Periodicity information T11 | P11 |
| Periodicity information T12 | P12 |
| Periodicity information T11 and time domain offset information $\Delta$T21 | P21 |
| ... | ... |

The implementation for uplink grant-based scheduling is used as an example. For example, the terminal device 20 may determine periodicity information T31 of PDCCH monitoring and corresponding probability information P31, and periodicity information T32 of PDCCH monitoring and corresponding probability information P32. For another example, the terminal device 20 may determine periodicity information T31 of PDCCH monitoring and time domain offset information $\Delta$T41 of PDCCH monitoring, and corresponding probability information P41. For example, the recommendation information may include a preset number of groups with maximum probability information. For example, the preset number is N2. In this case, the probability information may be sorted in descending order, to obtain the first N2 groups as the recommendation information. An example is shown in Table 2.

**Table 2**

| Recommendation for uplink grant-based scheduling | Probability information |
|---|---|
| Periodicity information T31 of PDCCH monitoring | P31 |
| Periodicity information T32 of PDCCH monitoring | P32 |
| Periodicity information T31 of PDCCH monitoring and time domain offset information $\Delta$T41 of PDCCH monitoring | P41 |
| ... | ... |

For example, the probability information may be represented by using an enumerate structure of a first preset length. For example, any one of the following probabilities is represented by using a 4-bit (bit) enumerate structure: 0%, 5%, 10%, 15%, 20%, 30%, 37%, 44%, 50%, 56%, 63%, 70%, 80%, 90%, 95%, or 100%. For example, the probability information may alternatively be represented by using a 5-bit enumerate structure. For example, an intermediate value may be added in the probability information represented by the foregoing 4 bits. It may be understood that the validity time and/or the probability information may alternatively be carried in another structure or manner. This is not limited in this disclosure.

In an embodiment, the recommendation information may further include target information, to indicate a target on which the recommendation for uplink scheduling is based. Specifically, when the terminal device 20 performs prediction by using the AI algorithm, the recommendation may be obtained for a specific target. In this case, the target information may be a target used when the recommendation is obtained. For example, the target information may include: an energy saving (Energy Saving) target, a low latency (Low Latency) target, a high reliability (High Reliability) target, or the like.

For example, the target information may be represented by using an enumerate structure of a second preset length. In an example, the target information may be carried in a 1-bit enumerate structure. For example, "0" indicates the energy saving target, and " 1" indicates the low latency target. In another example, the target information may be carried in a 2-bit enumerate structure, "00" represents the energy saving target, "01" represents the low latency target, and " 10" represents the high reliability target. In addition, it may be understood that the target information may alternatively be carried in another structure or manner. This is not limited in this disclosure.

In an embodiment, the recommendation information may further include reward feedback information, to indicate an observation result obtained when the terminal device 20 determines the recommendation for uplink scheduling, for example, a reward feedback that is to be provided by the network device 10 to the terminal device 20 and that is determined when the terminal device 20 determines the recommendation information. Specifically, when performing prediction by using the AI algorithm (such as reinforcement learning), the terminal device 20 may simultaneously predict a reward feedback to be obtained.

For example, the reward feedback information may be represented by using an enumerate structure of a third preset length. For example, the reward feedback information is carried in a 10-bit enumerate structure, for example, representing -1024, -1022, ..., 1022, or 1024. Optionally, a maximum value of the reward feedback information may be preconfigured by the network device 10, for example, may be 1024. In addition, it may be understood that the reward feedback information may alternatively be carried in another structure or manner. This is not limited in this disclosure.

It should be noted that although the foregoing separately shows the "first preset length", the "second preset length", and the "third preset length", it does not mean that the three are not equal to each other. Actually, the "first", the "second", and the "third" in this disclosure are independent of each other. For example, the three may be unequal to each other, or two or all of them are equal to each other. This is not limited in this disclosure.

Based on the foregoing description, in some embodiments of this disclosure, the recommendation information includes (1) periodicity information and/or time domain offset information for uplink grant-free scheduling or (2) periodicity information of PDCCH monitoring and/or offset information of PDCCH monitoring for uplink grant-based scheduling, and may further include at least one of the following for uplink transmission: a number of repetitions, an MCS, spectral efficiency of an MCS, validity time information, probability information, target information, or reward feedback information. For example, categories included in the recommendation information may be indicated by using an uplink configured preference list (UplinkConfiguredPreferenceList).

In some embodiments, the categories included in the recommendation information and the number of pieces of recommendation information may be indicated. For example, it may be indicated that the categories included in the recommendation information are periodicity information for uplink grant-free scheduling, time domain offset information for uplink grant-free scheduling, validity time information, probability information, target information, and reward feedback information. It may be indicated that the number of pieces of recommendation information is N. N is a positive integer.

Using N=3 as an example, the recommendation information may include the following three groups: (1) periodicity information 1, time domain offset information 1, validity time information 1, probability information 1, target information 1, and reward feedback information 1; (2) periodicity information 2, time domain offset information 2, validity time information 2, probability information 2, target information 2, and reward feedback information 2; and (3) periodicity information 3, time domain offset information 3, validity time information 3, probability information 3, target information 3, and reward feedback information 3.

In this way, the network device 10 can accurately learn the categories included in the recommendation information in the RRC message, so that parsing and processing can be performed more quickly, and processing efficiency is improved.

As shown in FIG. 2, in some embodiments, the network device 10 may determine 220 a configuration parameter of uplink scheduling based on the recommendation information.

Specifically, the network device 10 may determine 220 the configuration parameter of uplink scheduling based on the recommendation information and a load status of the network device 10.

In the implementation for grant-free scheduling, the configuration parameter may include a periodicity update configuration parameter and/or a time domain offset update configuration parameter for grant-free scheduling. In the implementation for grant-based scheduling, the configuration parameter may include a periodicity update configuration parameter of PDCCH monitoring and a time domain offset update configuration parameter of PDCCH monitoring for grant-based scheduling.

In some embodiments, the configuration parameter may further include another parameter for uplink transmission, such as the number of repetitions, an MCS, spectral efficiency of an MCS, a redundancy version, power control, or any combination thereof.

In some embodiments, the configuration parameter may also be referred to as an air interface parameter, an air interface configuration parameter, or the like. This is not limited in this disclosure. In this way, in this disclosure, the network device 10 considers the recommendation information of the terminal device 20 when determining the configuration parameter, so that the determined configuration parameter can meet a requirement of the terminal device 20, for example, meet a requirement of the terminal device 20 for a low latency of an uplink service or energy saving.

In this way, in this disclosure, when performing uplink scheduling for uplink transmission of the terminal device 20, the network device 10 may simultaneously consider the recommendation information from the terminal device 20, so that information on both sides of the terminal device 20 and the network device 10 can be considered more comprehensively during uplink scheduling, thereby ensuring accuracy during scheduling.

As shown in FIG. 2, in some embodiments, the network device 10 may send 230 the configuration parameter to the terminal device 20. The configuration parameter may be determined by the network device 10 based on the recommendation information and the load status of the network device 10.

In some embodiments, the network device 10 may send an RRC reconfiguration message to the terminal device 20. The RRC reconfiguration message includes the configuration parameter. In other words, the configuration parameter may be included in an RRC reconfiguration message.

Additionally or alternatively, as shown in FIG. 2, in some embodiments, the method may further include: The terminal device 20 updates 232 the configuration parameter for uplink transmission, and optionally performs uplink data transmission based on an updated configuration parameter.

Therefore, in embodiments described with reference to FIG. 2 to FIG. 4, the terminal device 20 can send the recommendation information for uplink scheduling to the network device 10 based on a feature of an uplink service to be transmitted by the terminal device 20, so that the network device 10 can adjust or update the configuration parameter of uplink scheduling in time based on the recommendation information. In embodiments of this disclosure, the network device 10 considers more comprehensive information when determining the configuration parameter, so that the determined configuration parameter of uplink scheduling is more accurate, and optimized resource utilization is further facilitated. In this manner, when determining the configuration parameter of uplink scheduling, the network device can consider information of both the terminal device and the network device, thereby ensuring timely transmission of the service of the terminal device, and reducing a delay.

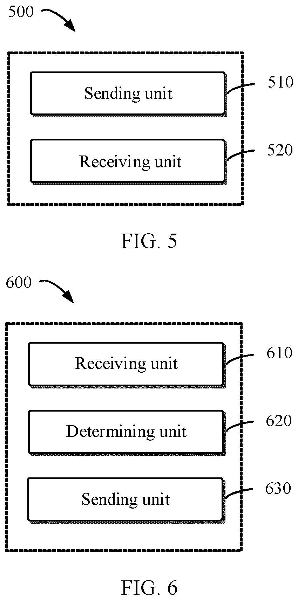

FIG. 5 is a schematic block diagram of a communications apparatus 500 according to an embodiment of this disclosure. The communications apparatus 500 may be implemented as the terminal device 20 or a chip in the terminal device 20. The scope of this disclosure is not limited in this aspect. The communications apparatus 500 may be implemented as the terminal device 20 in the foregoing embodiments or a part of the terminal device 20.

As shown in the figure, the communications apparatus 500 includes a sending unit 510, configured to send recommendation information to the network device 10. The recommendation information indicates a recommendation of the terminal device 20 for performing uplink scheduling by the network device 10. The communications apparatus 500 further includes a receiving unit 520, configured to receive a configuration parameter of uplink scheduling from the network device 10.

In some embodiments, the sending unit 510 is configured to send an RRC message to the network device 10. The RRC message includes the recommendation information, and the RRC message is one of the following messages: an RRC connection resume complete message, an RRC setup complete message, an RRC reconfiguration complete message, or an RRC recommendation message. Optionally, the RRC message may alternatively be an AI assistance message or another RRC message.

In some embodiments, the recommendation information may include at least one of the following for uplink grant-free scheduling: periodicity information or time domain offset information.

In some embodiments, the recommendation information may include at least one of the following for uplink grant-based scheduling: periodicity information of physical downlink control channel PDCCH monitoring or time domain offset information of PDCCH monitoring.

In some embodiments, the recommendation information includes at least one of the following for uplink transmission: a number of repetitions, a modulation and coding scheme MCS, or spectral efficiency of an MCS.

In some embodiments, the recommendation information may further include at least one of the following: validity time information, probability information, target information, or reward feedback information.

The communications apparatus 500 in FIG. 5 can be configured to perform the foregoing processes implemented by the terminal device 20 in the foregoing embodiment with reference to FIG. 2. To avoid repetition, details are not described herein again.

FIG. 6 is a schematic block diagram of a communications apparatus 600 according to some embodiments of this disclosure. The communications apparatus 600 may be implemented as the network device 10 or a chip in the network device 10. The scope of this disclosure is not limited in this aspect. The communications apparatus 600 may be implemented as the network device 10 in the foregoing embodiments or a part of the network device 10.

As shown in the figure, the communications apparatus 600 includes a receiving unit 610, configured to receive recommendation information from the terminal device 20. The recommendation information indicates a recommendation of the terminal device 20 for performing uplink scheduling by the network device 10. The communications apparatus 600 further includes a determining unit 620, configured to determine a configuration parameter of uplink scheduling based on the recommendation information. The communications apparatus 600 further includes a sending unit 630, configured to send the configuration parameter to the terminal device 20.

In some embodiments, the receiving unit 610 is configured to receive an RRC message from the terminal device 20. The RRC message includes the recommendation information, and the RRC message is one of the following messages: an RRC connection resume complete message, an RRC setup complete message, an RRC reconfiguration complete message, and an RRC recommendation message. Optionally, the RRC message may alternatively be an AI assistance message or another RRC message.

In some embodiments, the recommendation information may include at least one of the following for uplink grant-free scheduling: periodicity information or time domain offset information.

In some embodiments, the recommendation information may include at least one of the following for uplink grant-based scheduling: periodicity information of physical downlink control channel PDCCH monitoring or time domain offset information of PDCCH monitoring.

In some embodiments, the recommendation information may include at least one of the following for uplink transmission: the number of repetitions, a modulation and coding scheme MCS, or spectral efficiency of an MCS.

In some embodiments, the recommendation information may further include at least one of the following: validity time information, probability information, target information, or reward feedback information.

In some embodiments, the determining unit 620 is configured to determine the configuration parameter based on the recommendation information and a load status of the network device 10.

The communications apparatus 600 in FIG. 6 can be configured to perform the foregoing processes implemented by the network device 10 in the foregoing embodiment with reference to FIG. 2. To avoid repetition, details are not described herein again.

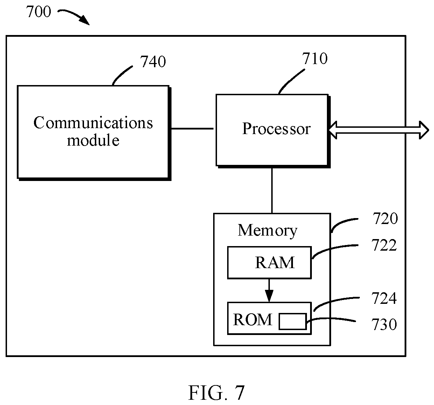

FIG. 7 is a simplified block diagram of an example device 700 according to an embodiment of this disclosure. The device 700 may be configured to implement the terminal device 20 or the network device 10 shown in FIG. 1. As shown in the figure, the device 700 includes one or more processors 710, one or more memories 720 coupled to the processor 710, and a communications module 740 coupled to the processor 710.

The communications module 740 may be configured for bidirectional communication. The communications module 740 may have at least one communications interface for communication. The communications interface may include any interface necessary to communicate with other devices.

The processor 710 may be of any type suitable for a local technology network, and may include but not limited to at least one of the following: one or more of a general-purpose computer, a dedicated computer, a microcontroller, a digital signal processor (Digital Signal Processor, DSP), or a controller-based multi-core controller architecture. The device 700 may have a plurality of processors, such as application-specific integrated circuit chips, which in time belong to a clock synchronized with a main processor.

The memory 720 may include one or more non-volatile memories and one or more volatile memories. An example of the non-volatile memory includes but is not limited to at least one of the following: a read-only memory (Read-Only Memory, ROM) 724, an erasable programmable read-only memory (Erasable Programmable Read Only Memory, EPROM), a flash memory, a hard disk, a compact disc (Compact Disc, CD), a digital versatile disc (Digital Versatile Disc, DVD), or other magnetic storages and/or optical storages. An example of the volatile memory includes but is not limited to at least one of the following: a random access memory (Random Access Memory, RAM) 722, or another volatile memory that does not persist during a power failure.

A computer program 730 includes computer-executable instructions for execution by an associated processor 710. The program 730 may be stored in the ROM 720. The processor 710 may perform any appropriate actions and processing by loading the program 730 into the RAM 720.

Embodiments of this disclosure may be implemented by using the program 730, so that the device 700 may perform any one of the processes discussed with reference to FIG. 2. Embodiments of this disclosure may alternatively be implemented by using hardware or by using a combination of software and hardware.

In some embodiments, the program 730 may be tangibly included in a computer-readable medium, and the computer-readable medium may be included in the device 700 (for example, in the memory 720) or other storage devices that may be accessed by the device 700. The program 730 may be loaded from the computer-readable medium to the RAM 722 for execution. The computer-readable medium may include any type of tangible non-volatile memory, such as a ROM, an EPROM, a flash memory, a hard disk, a CD, or a DVD.

Generally, various embodiments of this disclosure may be implemented by using hardware or a dedicated circuit, software, logic, or any combination thereof. Some aspects may be implemented by using hardware, while other aspects may be implemented by using firmware or software, which may be performed by a controller, a microprocessor, or another computing device. Although various aspects of embodiments of this disclosure are shown and described as block diagrams, flowcharts, or represented by using some other diagrams, it should be understood that the blocks, apparatuses, systems, techniques, or methods described herein may be implemented as, for example rather than limitation, hardware, software, firmware, dedicated circuitry or logic, general-purpose hardware or controllers, or other computing devices, or a combination thereof.

This disclosure further provides at least one computer program product that is tangibly stored in a non-transitory computer-readable storage medium. The computer program product includes computer-executable instructions, for example, instructions included in program modules, which are executed in a device on a target real or virtual processor to perform the foregoing process/method with reference to FIG. 2. Generally, the program modules include routines, programs, libraries, objects, classes, components, data structures, and the like that perform specific tasks or implement specific abstract data types. In various embodiments, functions of the program modules may be combined or split between the program modules as desired. Machine-executable instructions for the program modules may be executed locally or in a distributed device. In the distributed device, the program modules may be located in local and remote storage media.

Computer program code for implementing the method of this disclosure may be written in one or more programming languages. The computer program code may be provided to a processor of a general-purpose computer, a dedicated computer, or another programmable data processing apparatus, so that when the program code is executed by the computer or the another programmable data processing apparatus, a function/operation specified in a flowchart and/or a block diagram is implemented. The program code may be executed entirely on a computer, partly on a computer, as a standalone software package, partly on a computer and partly on a remote computer, or entirely on a remote computer or server.

In the context of this disclosure, computer program code or related data may be carried by any appropriate carrier to enable a device, an apparatus, or a processor to perform various processing and operations described above. Examples of the carrier include a signal, a computer-readable medium, and the like. Examples of the signal may include electrical, optical, radio, acoustic, or other forms of propagated signals, such as a carrier wave or an infrared signal.

The computer-readable medium may be any tangible medium that contains or stores programs for or related to an instruction execution system, apparatus, or device. The computer-readable medium may be a computer-readable signal medium or a computer-readable storage medium. The computer-readable medium may include but is not limited to electronic, magnetic, optical, electromagnetic, infrared, or semiconductor systems, apparatuses, or devices, or any appropriate combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

Besides, although operations of the method in this disclosure are described in a specific order in the accompanying drawings, it is not required or implied that these operations need to be performed in the specific order, or all of the operations shown need to be performed to achieve a desired result. Instead, steps depicted in the flowchart may be performed in a different order. Additionally or alternatively, some steps may be omitted, a plurality of steps may be combined into one step for execution, and/or one step may be split into a plurality of steps for execution. It should also be noted that features and functions of two or more devices according to this disclosure may be embodied in one device. Conversely, a feature and a function of one apparatus described above may be further divided into embodiments of a plurality of apparatuses.

Implementations of this disclosure have been described above. The foregoing description is illustrative rather than exhaustive, and this disclosure is not limited to the implementations disclosed. Many modifications and changes are apparent to a person of ordinary skill in the art without departing from the scope and spirit of the described implementations. Terms used in this specification are selected to well explain principles or actual applications of each implementation or improvements to technologies in the market, or enable another person of ordinary skill in the art to understand each implementation disclosed in this specification.

## Claims

1. A communications method, comprising:

   sending, by a terminal device, recommendation information to a network device, wherein the recommendation information indicates a recommendation of the terminal device for performing uplink scheduling by the network device; and
   receiving, by the terminal device, a configuration parameter of uplink scheduling from the network device.

2. The communications method according to claim 1, wherein the recommendation information comprises at least one of the following for uplink grant-free scheduling: periodicity information or time domain offset information.

3. The communications method according to claim 1, wherein the recommendation information comprises at least one of the following for uplink grant-based scheduling: periodicity information of physical downlink control channel PDCCH monitoring or time domain offset information of PDCCH monitoring.

4. The communications method according to any one of claims 1 to 3, wherein the recommendation information comprises at least one of the following for uplink transmission: a number of repetitions, a modulation and coding scheme MCS, or spectral efficiency of an MCS.

5. The communications method according to any one of claims 1 to 4, wherein the recommendation information further comprises at least one of the following:

   validity time information,
   probability information,
   target information, or
   reward feedback information.

6. The communications method according to any one of claims 1 to 5, wherein the sending, by a terminal device, recommendation information to a network device comprises:
   sending, by the terminal device, a radio resource control RRC message to the network device, wherein the RRC message comprises the recommendation information, and the RRC message is one of the following messages: an RRC connection resume complete message, an RRC setup complete message, an RRC reconfiguration complete message, and an RRC recommendation message.

7. A communications method, comprising:

   receiving, by a network device, recommendation information from a terminal device, wherein the recommendation information indicates a recommendation of the terminal device for performing uplink scheduling by the network device;
   determining, by the network device, a configuration parameter of uplink scheduling based on the recommendation information; and
   sending, by the network device, the configuration parameter to the terminal device.

8. The communications method according to claim 7, wherein the recommendation information comprises at least one of the following for uplink grant-free scheduling: periodicity information or time domain offset information.

9. The communications method according to claim 7, wherein the recommendation information comprises at least one of the following for uplink grant-based scheduling: periodicity information of physical downlink control channel PDCCH monitoring or time domain offset information of PDCCH monitoring.

10. The communications method according to any one of claims 7 to 9, wherein the recommendation information comprises at least one of the following for uplink transmission: a number of repetitions, a modulation and coding scheme MCS, or spectral efficiency of an MCS.

11. The communications method according to any one of claims 7 to 10, wherein the recommendation information further comprises at least one of the following:

    validity time information,
    probability information,
    target information, or
    reward feedback information.

12. The communications method according to any one of claims 7 to 11, wherein the receiving, by a network device, recommendation information from a terminal device comprises:
    receiving, by the network device, a radio resource control RRC message from the terminal device, wherein the RRC message comprises the recommendation information, and the RRC message is one of the following messages: an RRC connection resume complete message, an RRC setup complete message, an RRC reconfiguration complete message, and an RRC recommendation message.

13. The communications method according to any one of claims 7 to 12, wherein the determining, by the network device, a configuration parameter of uplink scheduling based on the recommendation information comprises:
    determining, by the network device, the configuration parameter based on the recommendation information and a load status of the network device.

**14.** A communications apparatus, comprising:

a sending unit, configured to send recommendation information to a network device, wherein the recommendation information indicates a recommendation of the terminal device for performing uplink scheduling by the network device; and
a receiving unit, configured to receive a configuration parameter of uplink scheduling from the network device.

**15.** The communications apparatus according to claim 14, wherein the recommendation information comprises at least one of the following for uplink grant-free scheduling: periodicity information or time domain offset information.

**16.** The communications apparatus according to claim 14, wherein the recommendation information comprises at least one of the following for uplink grant-based scheduling: periodicity information of physical downlink control channel PDCCH monitoring or time domain offset information of PDCCH monitoring.

**17.** The communications apparatus according to any one of claims 14 to 16, wherein the recommendation information comprises at least one of the following for uplink transmission: a number of repetitions, a modulation and coding scheme MCS, or spectral efficiency of an MCS.

**18.** The communications apparatus according to any one of claims 14 to 17, wherein the recommendation information further comprises at least one of the following:

validity time information,
probability information,
target information, or
reward feedback information.

**19.** The communications apparatus according to any one of claims 14 to 18, wherein the sending unit is configured to: send a radio resource control RRC message to the network device, wherein the RRC message comprises the recommendation information, and the RRC message is one of the following messages: an RRC connection resume complete message, an RRC setup complete message, an RRC reconfiguration complete message, and an RRC recommendation message.

**20.** A communications apparatus, comprising:

a receiving unit, configured to receive recommendation information from a terminal device, wherein the recommendation information indicates a recommendation of the terminal device for performing uplink scheduling by the network device;
a determining unit, configured to determine a configuration parameter of uplink scheduling based on the recommendation information; and
a sending unit, configured to send the configuration parameter to the terminal device.

**21.** The communications apparatus according to claim 20, wherein the recommendation information comprises at least one of the following for uplink grant-free scheduling: periodicity information or time domain offset information.

**22.** The communications apparatus according to claim 20, wherein the recommendation information comprises at least one of the following for uplink grant-based scheduling: periodicity information of physical downlink control channel PDCCH monitoring or time domain offset information of PDCCH monitoring.

**23.** The communications apparatus according to any one of claims 20 to 22, wherein the recommendation information comprises at least one of the following for uplink transmission: a number of repetitions, a modulation and coding scheme MCS, or spectral efficiency of an MCS.

**24.** The communications apparatus according to any one of claims 20 to 23, wherein the recommendation information further comprises at least one of the following:

validity time information,
probability information,
target information, or

reward feedback information.

25. The communications apparatus according to any one of claims 20 to 24, wherein the receiving unit is configured to: receive a radio resource control RRC message from the terminal device, wherein the RRC message comprises the recommendation information, and the RRC message is one of the following messages: an RRC connection resume complete message, an RRC setup complete message, an RRC reconfiguration complete message, and an RRC recommendation message.

26. The communications apparatus according to any one of claims 20 to 25, wherein the determining unit is configured to: determine the configuration parameter based on the recommendation information and a load status of the network device.

27. A computer-readable storage medium, wherein the computer-readable storage medium stores a computer program, and when the computer program is executed by a processor, the communications method according to any one of claims 1 to 13 is implemented.

28. A chip, configured to perform the communications method according to any one of claims 1 to 13.

100

10

20

FIG. 1

200

20
Terminal device

10
Network device

202 Determine a service feature

204 Determine whether a configuration of uplink scheduling meets the service feature

Recommendation information
210

220 Determine a configuration parameter

Configuration parameter
230

232 Update the configuration parameter

FIG. 2

300

TR1    TR2    TR3    TR4    TR5    TR6

Uplink transmission
opportunity

Uplink transmitted
packet

1    2    3    4    5    6

Δt1

Δt2

FIG. 3

400

TD1    TD2    TD3    TD4    TD5    TD6

PDCCH transmission
opportunity

410    420    430    440

Uplink transmitted
packet

1    3

1    2    3    4    5    6

Δt3    Δt4

FIG. 4

500

Sending unit —— 510

Receiving unit —— 520

FIG. 5

600

Receiving unit —— 610

Determining unit —— 620

Sending unit —— 630

FIG. 6

700

740

710

Communications
module

Processor

Memory

720

RAM

722

ROM

724

730

FIG. 7

## INTERNATIONAL SEARCH REPORT

| International application No. |
| --- |
| **PCT/CN2022/076682** |

**A.    CLASSIFICATION OF SUBJECT MATTER**

H04W 72/12(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; DWPI; VEN; CJFD; 3GPP: 上行, 调度, 建议, 偏好, 配置, 参数, 免授权, 偏移, 周期, uplink, schedule, suggest, configure, period, offset, grant free

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 113784449 A (SHENZHEN TRANSSION HOLDINGS CO., LTD.) 10 December 2021 (2021-12-10)<br>description, paragraphs [0035]-[0253] | 1-28 |
| X | WO 2021031089 A1 (OPPO GUANGDONG MOBILE TELECOMMUNICATIONS CO., LTD.) 25 February 2021 (2021-02-25)<br>description, page 2, line 24 to page 13, line 16 | 1-28 |
| X | CN 112399569 A (HUAWEI TECHNOLOGIES CO., LTD.) 23 February 2021 (2021-02-23)<br>description, paragraphs [0208]-[0737] | 1-28 |
| X | WO 2021023215 A1 (HUAWEI TECHNOLOGIES CO., LTD.) 11 February 2021 (2021-02-11)<br>description, page 9, line 5 to page 32, line 24 | 1-28 |
| A | WO 2020204464 A1 (LG ELECTRONICS INC.) 08 October 2020 (2020-10-08)<br>entire document | 1-28 |

☐ Further documents are listed in the continuation of Box C.        ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **08 April 2022** | **27 April 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/076682**

| Patent document cited in search report | | | Publication date (day/month/year) | Patent family member(s) | | | Publication date (day/month/year) |
|---|---|---|---|---|---|---|---|
| CN | 113784449 | A | 10 December 2021 | None | | | |
| WO | 2021031089 | A1 | 25 February 2021 | CN | 113632561 | A | 09 November 2021 |
| CN | 112399569 | A | 23 February 2021 | WO | 2021027887 | A1 | 18 February 2021 |
| WO | 2021023215 | A1 | 11 February 2021 | CN | 112332891 | A | 05 February 2021 |
| WO | 2020204464 | A1 | 08 October 2020 | None | | | |

Form PCT/ISA/210 (patent family annex) (January 2015)